# EUROPÄISCHE PATENTSCHRIFT

(11) **EP 2 047 425 B1**
(45) Veröffentlichungstag und Bekanntmachung des Hinweises auf die Patenterteilung: **14.09.2011**
(21) Anmeldenummer: 07786531.9
(22) Anmeldetag: 02.08.2007
(51) Int. Cl.: G06T 7/00

(54) **VORRICHTUNG UND VERFAHREN ZUR ZUSAMMENFASSUNG MEHRERER TEILBILDER FÜR BELIEBIGE ABBILDUNGSFLÄCHEN**
DEVICE AND METHOD FOR COMPILING SEVERAL PARTIAL IMAGES FOR ANY DISPLAY SURFACE
DISPOSITIF ET PROCÉDÉ POUR RÉALISER LA FUSION DE PLUSIEURS IMAGES PARTIELLES POUR DES SURFACES DE REPRÉSENTATION QUELCONQUES

(30) Priorität: 31.08.2006 DE 102006040791
(43) Veröffentlichungstag der Anmeldung: 15.04.2009
(73) Patentinhaber: Fraunhofer-Gesellschaft zur Förderung der angewandten Forschung e.V., 80686 München (DE)
(72) Erfinder: KUBE, Matthias, 90762 Fürth (DE); SCHOLZ, Oliver, 91096 Möhrendorf (DE); BEHRENDT, Rolf, 91077 Dormitz (DE)
(74) Vertreter: Zinkler, Franz
(86) Internationale Anmeldenummer: PCT/EP2007/006861
(87) Internationale Veröffentlichungsnummer: WO 2008/025431

(56) Entgegenhaltungen:
- EP-A- 0 618 719
- DE-A1- 10 301 941
- US-A- 4 797 942
- US-A- 6 002 743
- US-A1- 2004 169 870
- US-A1- 2004 175 057
- GUPTA NISHEETH ET AL: "A VLSI architecture for image registration in real time" IEEE TRANS VERY LARGE SCALE INTEGR VLSI SYST; IEEE TRANSACTIONS ON VERY LARGE SCALE INTEGRATION (VLSI) SYSTEMS SEPTEMBER 2007, Bd. 15, Nr. 9, September 2007 (2007-09), Seiten 981-989, XP002458188
- XINGHUA AN ET AL: "A new parallel algorithm of image mosaic" 2000 4TH INTERNATIONAL CONFERENCE ON ALGORITHMS AND ARCHITECTURES FOR PARALLEL PROCESSING WORLD SCIENTIFIC SINGAPORE, SINGAPORE, 2000, Seiten 699-700, XP009091550 ISBN: 981-02-4481-9

## Beschreibung

Die vorliegende Erfindung bezieht sich auf eine Vorrichtung zur optischen Aufnahme eines Schirms, beispielsweise eines Szintillatorschirms, in mehreren Einzelbildern, die dann zu einem Gesamtbild zusammengefasst werden, wie es beispielsweise in der digitalen Radioskopie in der Qualitätskontrolle von Produkten vorkommt.

Das technische Einsatzgebiet der hier beschriebenen Erfindung ist vorzugsweise die Verarbeitung von Röntgenbilddaten, insbesondere in der industriellen Qualitätskontrolle an Produkten, die mittels Röntgenstrahlung durchgeführt wird. Ein wichtiger Anwendungsfall ist die Detektion von Lunkern, Porositäten oder anderen Fehlstellen in Gussteilen, wie z. B. Aluminiumrädern. Da der Abbildungsbereich der Prüflinge in diesem Anwendungsgebiet oftmals sehr groß ist, lässt sich ein einzelner Prüfling nicht durch eine Einzelbildaufnahme überprüfen. Um die Prüfzeit möglichst gering zu halten, werden häufig mehrere Kameras bzw. Röntgendetektoren verwendet, um aus mehreren Einzelaufnahmen ein Gesamtbild zusammenzusetzen.

Gerade bei der Durchstrahlung von großen Objekten muss ein Detektor mit einer möglichst großen Abbildungsfläche, die sich aus Teilflächen zusammensetzen kann, eingesetzt werden. Für eine anschließende Auswertung der Einzelbilder mit Software müssen die Einzelbilder zu einem Gesamtbild zusammengefasst werden. Je nach Größe des zu untersuchenden Objektes kann dabei eine große Anzahl von Einzelbildern, mit beliebigen Geometrien oder Anordnungen, auftreten. Ein Nachteil hierbei ist, dass die notwendige Bildverarbeitung zum Zusammensetzen der Einzelbilder zum Gesamtbild, je nach Geometrien der Bilder und je nach Anzahl der Einzelbilder sehr komplex und zeitaufwändig werden kann.

Für die Durchstrahlung sehr großer Objekte bieten die Röntgenbilddetektoren meist eine zu kleine Abbildungsfläche. Bei einer alternativen Methode wird daher das Objekt durch Verschieben des Detektors in Teilbilder zerlegt. Durch das Verschieben des Detektors treten Probleme wie die genaue Positionierung, Schwingungen beim Abstoppen des Detektors etc. auf. Dies bedeutet einen hohen mechanischen Aufwand zur Verschiebung des Detektors und macht eine Synchronisation zwischen dem Verschieben, der Bildaufnahme und nachfolgender Auswertung notwendig, was letztendlich zu langen Prüfzeiten führt. Lange Prüfzeiten sind gerade bei der industriellen Prüfung von Produkten äußerst nachteilig, aufgrund des durch die langen Prüfzeiten hervorgerufenen Bindens von Prüfkapazitäten und den damit verbundenen Kosten.

In der DE 103 01 941 B4 werden eine Kamera und ein Verfahren zur optischen Aufnahme eines Schirms beschrieben. Die hier beschriebene Kamera und das hier beschriebene Verfahren lassen sich zur Erfassung von Röntgenbilddaten, d. h. zum Erfassen von Einzelbildern anwenden. Die Kamera weist dabei einen Kameraträger mit einem Array von Kamerabefestigungen auf, an dem optische Einzelkameras befestigt sind, sowie eine Bildverarbeitungseinrichtung zum Bearbeiten von digitalen Einzelbildern des Arrays von optischen Einzelkameras, um eine optische Aufnahme des Schirms mit einer vorbestimmten Gesamtauflösung zu erzeugen. Die Bildverarbeitungseinrichtung nimmt dabei eine Korrektur der Einzelbilder hinsichtlich Ausrichtungsungenauigkeiten und/oder Parameterschwankungen vor, wobei für Korrekturzwecke eine Korrekturauflösung verwendet wird, die höher als die Gesamtauflösung ist, und wobei für die Korrektur für jede einzelne Kamera eine eigene Korrekturvorschrift verwendet wird. Es erfolgt also eine geometrische Korrektur der Einzelbilder, bevor sie zu einem Gesamtbild zusammengefasst werden. Die geometrische Korrektur umfasst das Ausrichten der Einzelbilder, sowohl rotatorisch als auch translatorisch. Nach erfolgter Korrektur wird das korrigierte Gesamtbild durch Kombination benachbarter Pixel auf die vorbestimmte Gesamtauflösung gebracht. Damit ermöglicht der Einsatz günstiger Einzelkameras eine effiziente, preisgünstige und artefaktarme Abbildung eines großformatigen Schirms. Problematisch sind hierbei die Bildverarbeitungszeiten, da das Zusammenfügen der Einzelbilder sehr viel Zeit beanspruchen kann, wobei die Prozesszeiten überproportional mit der Anzahl der Einzelbilder wachsen können.

US-A-4797942 offenbart ein Verfahren zur Bildverarbeitung, wobei sogenannte Pyramidenverfahren zum Einsatz kommen. Aus einer Mehrzahl von hochauflösenden Teilbildern, wie sie beispielsweise durch eine feldartige Anordnung von Kameras erzeugt werden können, wird ein Gesamtbild in niedrigerer Auflösung erzeugt, in dem Randeffekte der Teilbilder unterdrückt sind. Dabei können Bildpunkte der Teilbilder in einem konvergenten Verfahren oder einem divergenten Verfahren zusammengefasst werden.

Die US 2004/169870 A1 offenbart ein Verfahren zur Bildverarbeitung zur Verbesserung der Bildqualität, beispielsweise bei eingescannten Texten. Hierbei können eine Mehrzahl von Bildelementen zum Einsatz kommen, die unterschiedliche Auflösungen aufweisen. Die Teilbilder können dann untereinander verglichen werden, und Fehler auf diese Art und Weise reduziert werden.

Es ist Aufgabe der vorliegenden Erfindung eine Vorrichtung und ein Verfahren zu schaffen, die ein effizientes Zusammenfügen von Einzelbilddaten zu einem Gesamtbild ermöglichen.

Diese Aufgabe wird gelöst durch eine Vorrichtung gemäß Anspruch 1 und ein Verfahren gemäß Anspruch 7.

Die vorliegende Erfindung schafft eine Vorrichtung zum Bereitstellen eines Bildes basierend auf einer Mehrzahl von Eingangsbildern. Die Vorrichtung umfasst eine erste Stufe mit mindestens einer ersten und einer zweiten Zusammenfassungseinrichtung, wobei jede der Zusammenfassungseinrichtungen eine erste Speichereinrichtung zum Speichern von Bilddaten der Eingangsbilder, eine erste Verarbeitungseinrichtung zum Verarbeiten der Bilddaten der Eingangsbilder zu einem Zwischenbild und eine zweite Speichereinrichtung zum Speichern von Bilddaten des Zwischenbildes umfasst. Die Vorrichtung weist ferner eine zweite Stufe mit zumindest einer weiteren Zusammenfassungseinrichtung auf, wobei die weitere Zusammenfassungseinrichtung eine dritte Speichereinrichtung zum Speichern von Bilddaten der Zwischenbilder, die in den zweiten Speichereinrichtungen der ersten Stufe gespeichert sind, eine zweite Verarbeitungseinrichtung zum Verarbeiten der Bilddaten aus der dritten Speichereinrichtung, um die Bilddaten der Zwischenbilder zu dem Bild zusammenzufassen und eine vierte Speichereinrichtung zum Speichern von Bilddaten des Bildes.

Die vorliegende Erfindung schafft ferner ein Verfahren zum Bereitstellen eines Bildes basierend auf einer Mehrzahl von Eingangsbildern, mit einem Schritt des Empfangens von Bilddaten erster Eingangsbilder, Verarbeiten der Bilddaten der ersten Eingangsbilder zu einem ersten Zwischenbild und Bereitstellen des ersten Zwischenbildes. Ferner weist das Verfahren einen Schritt des Empfangens von Bilddaten zweiter Eingangsbilder auf, einen Schritt des Verarbeitens der Bilddaten der zweiten Eingangsbilder zu einem zweiten Zwischenbild und einem Schritt des Bereitstellens des zweiten Zwischenbildes. Das Verfahren umfasst ferner einen Schritt des Verarbeitens der Bilddaten des ersten Zwischenbildes und des zweiten Zwischenbildes zu dem Bild, sowie einen Schritt des Bereitstellens des Bildes.

Ausführungsbeispiele der vorliegenden Erfindung bieten den Vorteil, dass die Bildverarbeitung, die die Einzelbilder zu einem Gesamtbild zusammenfasst, parallelisiert wird und in eine Pipeline-Struktur gebracht werden kann. Nach diesem Konzept kann die Bildverarbeitung parallel erfolgen, indem zunächst Gruppen von Einzelbildern zu Zwischenbildern zusammengefasst werden, die im Anschluss, durch an sich baugleiche Vorrichtungen, ihrerseits zu einem Gesamtbild zusammengefasst werden können. Die dadurch entstehende Struktur der Bildverarbeitung bildet die Möglichkeit, die Bildverarbeitung in kaskadierter Form vorzunehmen. Durch eine Taktung ist es nun möglich, in die entstandene Pipeline-Struktur neue Einzelbilddaten einzubringen, noch bevor alte Zwischenbilddaten zu einem Gesamtbild zusammengefasst wurden. Die erfindungsgemäße Vorrichtung bietet somit die Möglichkeit, Bilddaten, in Form von Einzelbilddaten und Zwischenbilddaten von mehreren Gesamtbildern gleichzeitig zu verarbeiten. Die gesamte Bildverarbeitung kann dadurch wesentlich effizienter erfolgen.

Ausführungsbeispiele der vorliegenden Erfindung werden nachfolgend Bezug nehmend auf die beiliegenden Zeichnungen näher erläutert. Es zeigen:
- Fig. 1: ein prinzipielles Blockschaltbild eines Ausfüh- rungsbeispiels einer Zusammenfassungseinrichtung;
- Fig. 2: ein prinzipielles Blockschaltbild eines Ausfüh- rungsbeispiels einer erfindungsgemäßen Vorrich- tung zum Bereitstellen eines Bildes; und
- Fig. 3: ein weiteres Ausführungsbeispiel einer Kaskadie- rung von Zusammenfassungseinrichtungen.

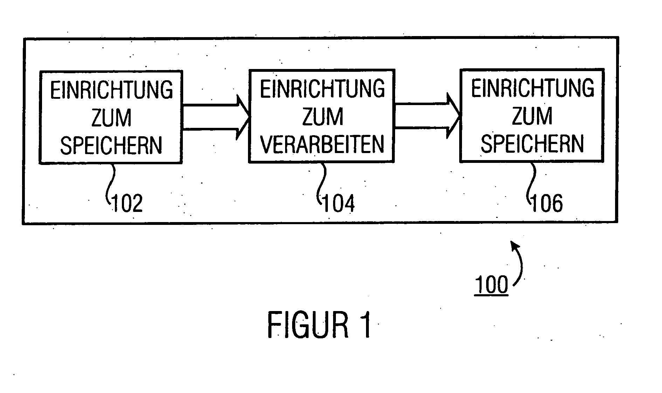

Fig. 1 zeigt ein prinzipielles Blockschaltbild eines Ausführungsbeispiels einer Zusammenfassungseinrichtung 100. Die Zusammenfassungseinrichtung 100 in Fig. 1 weist eine Einrichtung 102 zum Speichern von Bilddaten von Eingangsbildern auf. Die Einrichtung 102 zum Speichern von Bilddaten der Eingangsbilder stellt diese Bilddaten einer Einrichtung 104 zum Verarbeiten der Bilddaten der Eingangsbilder zu einem Zwischenbild zur Verfügung. Die Einrichtung 104 zum Verarbeiten der Bilddaten der Eingangsbilder stellt wiederum die Bilddaten des Zwischenbildes einer Einrichtung 106 zum Speichern der Bilddaten des Zwischenbildes zur Verfügung. Die Einrichtung 104 zum Verarbeiten von Bilddaten fasst dabei Bilddaten der Eingangsbilder zusammen, wobei in Abhängigkeit von Parametern die Bilddaten der Einzelbilder beispielsweise geometrisch aneinander angepasst werden. Es kann z. B. notwendig sein, dass die Einzelbilder vor dem Zusammenfügen verschoben oder gedreht werden, was dann in der Einrichtung 104 zum Verarbeiten von Bilddaten geschehen kann. In einem anderen Ausführungsbeispiel werden beispielsweise die Lichtintensitäten d. h. die Helligkeitsgrade oder auch der Kontrast der Einzelbilder aufeinander abgestimmt.

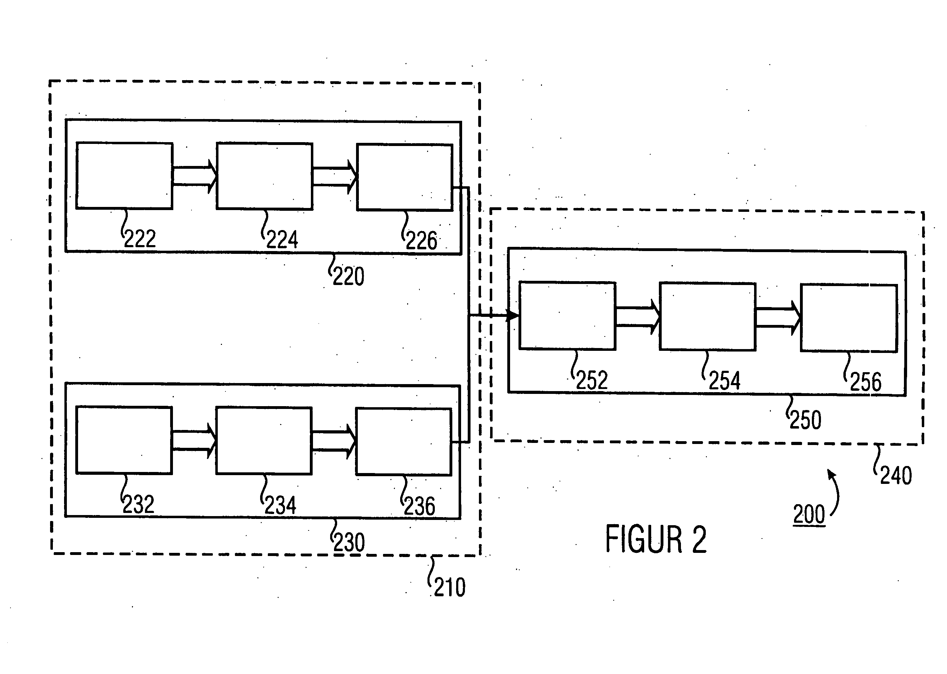

Die Fig. 2 zeigt ein Ausführungsbeispiel der erfindungsgemäßen Vorrichtung 200 zum Bereitstellen eines Bildes basierend auf einer Mehrzahl von Einzelbildern. Die Vorrichtung 200 zum Bereitstellen eines Bildes weist eine erste Stufe 210 mit zwei Zusammenfassungseinrichtungen 220 und 230 auf. Im in Fig. 2 gezeigten Ausführungsbeispiel weist die erfindungsgemäße Vorrichtung 200 lediglich zwei Zusammenfassungseinrichtungen 220 und 230 in der ersten Stufe 210 auf. Im allgemeinen Fall sind Ausführungsbeispiele der vorliegenden Erfindung nicht auf zwei Zusammenfassungseinrichtungen pro Stufe beschränkt, sondern können Zusammenfassungseinrichtungen in beliebiger Anzahl aufweisen.

Im Ausführungsbeispiel in Fig. 2 ist jede der Zusammenfassungseinrichtungen 220 und 230 identisch zu der Zusammenfassungseinrichtung die anhand der Fig. 1 erläutert wurde aufgebaut. So weisen die Zusammenfassungseinrichtungen 220 und 230 der ersten Stufe 210 je eine Speichereinrichtung 222 bzw. 232 zum Speichern von Bilddaten von Eingangsbildern auf, je eine Verarbeitungseinrichtung 224 bzw. 234 zum Verarbeiten der Bilddaten der Eingangsbilder zu einem Zwischenbild und je eine Speichereinrichtung 226 bzw. 236 zum Speichern der Bilddaten des Zwischenbildes auf. Die Vorrichtung 200 zum Bereitstellen des Bildes weist ferner eine zweite Stufe 240 mit einer weiteren Zusammenfassungseinrichtung 250 auf. Im Ausführungsbeispiel in Fig. 2 ist in der zweiten Stufe 240 lediglich eine Zusammenfassungseinrichtung 250 gezeigt. Im allgemeinen Fall ist auch die Stufe 240 nicht auf das Vorhandensein einer einzigen Zusammenfassungseinrichtung 250 beschränkt, sondern prinzipiell können auch hier beliebig viele Zusammenfassungseinrichtungen vorhanden sein.

Die Zusammenfassungseinrichtung 250 der zweiten Stufe 240 ist ebenfalls gleichartig zu der anhand von Fig. 1 besprochenen Zusammenfassungseinrichtung aufgebaut. Die Zusammenfassungseinrichtung 250 weist eine Speichereinrichtung 252 zum Speichern von Bilddaten der Eingangsbilder auf, wobei die Eingangsbilder der Zusammenfassungseinrichtung 250 nunmehr von den Zusammenfassungseinrichtungen 220 und 230 der ersten Stufe 210 zur Verfügung gestellt werden, d. h. die Eingangsbilder der zweiten Stufe 240 sind die Ausgangsbilder der ersten Stufe 210. Die Zusammenfassungseinrichtung 250 weist ferner eine Verarbeitungseinrichtung 254 zum Verarbeiten der Bilddaten der Zwischenbilder auf, und fasst diese zu einem Bild zusammen, ferner weist die Zusammenfassungseinrichtung 250 eine Speichereinrichtung zum Speichern 256 von Bilddaten des Bildes auf.

Anhand des Ausführungsbeispiels der erfindungsgemäßen Vorrichtung 200 in Fig. 2 lässt sich erkennen, dass während die zweite Stufe 240 Bilddaten verarbeitet, bereits die Speichereinrichtungen 222 und 232 zum Speichern der Eingangsbilddaten der Zusammenfassungseinrichtungen 220 und 230 der ersten Stufe 210 neu beschrieben werden können. Es ergibt sich daraus eine Pipeline-Struktur.

Ausführungsbeispiele der vorliegenden Erfindung sehen vor, dass ein Nutzer, beispielsweise während des Betriebes einer Überwachungsvorrichtung in der Fertigung von Gussteilen, bestimmte Teilbereiche betrachten möchte, engl. Region of interest (ROI). In solchen Fällen kann es vorkommen, dass bestimmte Einzelbilder nicht zur Kombination verwendet werden, bzw. als leere Bilder betrachtet werden. Für solche Fälle bieten die erfindungsgemäßen Ausführungsbeispiele eine sehr hohe Flexibilität, da sämtliche Kombinationsmöglichkeiten von Bilddaten der Einzel- und/oder Zwischenbilder realisierbar sind und beispielsweise in den Verarbeitungsvorrichtungen über Parameter einstellbar sind. In einem Ausführungsbeispiel der vorliegenden Erfindung können die Kombinationsparameter beispielsweise über einen Steuerrechner schnell angepasst werden, sodass ein Nutzer verschiedene Teilbereiche eines Gesamtbildes zeitnah umschalten kann.

Basierend auf den Einzelbildern, deren Bilddaten im Ausführungsbeispiel in Fig. 2 in den Speichereinrichtungen 222 und 232 zum. Speichern von Bilddaten der Eingangsbilder gespeichert sind, dient die hier beschriebene Vorrichtung 200 und das entsprechende Verfahren zur Realisierung von Detektoren, bestehend aus vielen Einzelsensoren mit einer beliebigen Abbildungsfläche und Geometrie. Dazu werden die Einzelbilder der Sensoren in sequentiellen Stufen zu einem Gesamtbild zusammengefasst, die im Ausführungsbeispiel in Fig. 2 durch die Stufen 210 und 240 bezeichnet sind, wobei einstellbar ist, wie die Einzelbilder in einem Gesamtbild anzuordnen sind. Die entsprechenden Verarbeitungseinrichtungen 224 und 234, die in der ersten Stufe 210 die Einzelbilddaten zu Zwischenbildern verarbeiten, können dabei entsprechende Parameter berücksichtigen. Selbiges gilt hinsichtlich der Verarbeitungseinrichtung 254 der zweiten Stufe 240, die ebenfalls entsprechende Parameter bei der Kombination der Zwischenbilder berücksichtigen kann. Während des Betriebes ist es möglich, nur einzelne, benachbarte Sensoren zu aktivieren, so dass ein Teilbereich des abgebildeten Objekts in einer höheren Auflösung übermittelt wird (ROI = Region Of Interest). Dazu ist es in jeder der Stufen 210 und 240 im Ausführungsbeispiel in Fig. 2 möglich, mehrere Pixel zusammenzufassen und somit die gewünschte Auflösung einzustellen.

Die anhand der Fig. 1 im Detail beschriebene Zusammenfassungseinrichtung 100, bzw. die Zusammenfassungseinrichtungen 220, 230 und 240 im Ausführungsbeispiel der Fig. 2, können mehrere Bildspeichern aufweisen, die die Bilddaten einer bestimmten Anzahl von Einzelbildern, die beispielsweise von Sensoren aufgenommen wurden, speichern, die Verarbeitungseinrichtungen 104, bzw. 224, 234 und 254 zum Verarbeiten der Bilddaten der Einzelbilder fassen dabei die Einzelbilder zusammen und könnten beispielsweise mit Hilfe eines Mikrocontrollers oder Prozessors realisiert sein. Die Daten werden dann für die nachfolgende Bearbeitung ausgegeben, was beispielsweise durch zusätzliche Bildspeicher, die die Speichereinrichtungen 106, 226, 236 oder 256 zum Speichern der Bilddaten der Zwischenbilder oder der Bilder realisieren, geschehen kann.

In welcher Weise eine Zusammenfassungseinrichtung, wie beispielsweise 100 in Fig. 1 oder 220, 230 bzw. 250 in Fig. 2, die Bilddaten der Einzelbilder von den Speichereinrichtungen 102, 222, 232 oder 252 zusammenfasst, kann in einem Ausführungsbeispiel der vorliegenden Erfindung über Parameter eingestellt werden. Dabei können die Bilddaten der Einzelbilder beispielsweise vertikal, horizontal oder quadratisch angeordnet werden, bzw. können auch die einzelnen Bildinhalte über die entsprechenden Parameter manipuliert werden.

In einem Ausführungsbeispiel der vorliegenden Erfindung werden im Rahmen der Parameter, die an die Zusammenfassungseinrichtungen gegeben werden zum Beispiel die Bildadressen der Einzelbilder, d.h. wie diese in den Zwischen- und/oder Gesamtbildern angeordnet sind, weitergegeben, die beispielsweise auch nur einen relevanten Teilbereich, engl. Region of interest, festlegen können. Zusätzlich können Parameter für eine geometrische Korrektur, wie z.B. Drehungen, Streckungen, Ausschnitte, Überlappungen usw. eingestellt werden. Optional können die Einzel-, Zwischen- und Gesamtbilder auch noch in Ihren Bildparametern, wie beispielsweise Farbeinstellungen, Helligkeitseinstellungen Kontrast usw. manipuliert werden. In einem weiteren Ausführungsbeispiel der vorliegenden Erfindung besteht auch die Möglichkeit Filter zu definieren, die bestimmte Übergänge in den Bildern filtern oder beispielsweise glätten.

Die Anzahl der Einzelbilder, die in den Speichereinrichtungen 102, 222, 232 oder 254 berücksichtigt werden können ist hierbei voll variabel. Ferner können benachbarte Pixel zusammengefasst werden und somit eine einstellbare Auflösung erreicht werden. Beim Einschalten der erfindungsgemäßen Vorrichtung werden der Vorrichtung, d. h. den Verarbeitungseinrichtungen 104, 224, 234 oder 254 feste Parameter zur Verfügung gestellt, die während des Betriebes veränderbar sind, um somit auch Teilbereiche des abgebildeten Objekts in der gewünschten Auflösung zu erhalten.

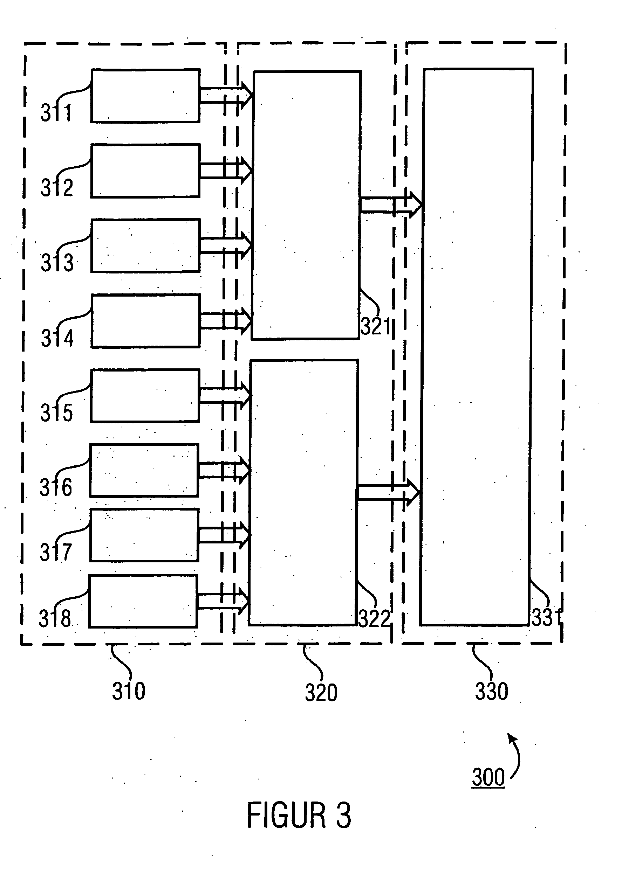

Fig. 3 zeigt ein Blockschaltbild eines weiteren Ausführungsbeispiels der vorliegenden Erfindung. Fig. 3 zeigt eine Vorrichtung 300 zum Bereitstellen eines Bildes, die auf nunmehr drei Verarbeitungsstufen 310, 320 und 330 aufgebaut ist. Die erste Verarbeitungsstufe 310 ist dabei aus den Zusammenfassungseinrichtungen 311 - 318 aufgebaut, die beispielsweise gemäß dem Ausführungsbeispiel, welches anhand der Fig. 1 erläutert wurde realisiert sind. Dies bedeutet jede der Zusammenfassungseinrichtungen 311 - 318 verfügt über die in der Fig. 1 dargestellte Einrichtung zum Speichern von Bilddaten der Eingangsbilder, die Einrichtung zum Verarbeiten der Bilddaten der Eingangsbilder zu einem Zwischenbild bzw. Bild und die Einrichtung zum Speichern der Bilddaten des Zwischenbildes bzw. Bildes, bevor die Daten entweder ausgegeben oder der nächsten Verarbeitungsstufe zur Verfügung gestellt werden. Die zweite Verarbeitungsstufe 320 in der Fig. 3 weist ebenfalls zwei Zusammenfassungseinheiten 321 und 322 auf, welche die Bilddaten der Eingangsbilder von den Zusammenfassungseinrichtungen 311 - 318 der ersten Verarbeitungsstufe 310 erhalten. Die dritte Verarbeitungsstufe 330 umfasst ebenfalls eine Zusammenfassungseinrichtung 321, die nunmehr von den Zusammenfassungseinrichtungen 321 und 322 der zweiten Verarbeitungsstufe 320 die Bilddaten der Eingangsbilder erhält, um diese zu einem Bild oder Gesamtbild zusammenzufassen.

Gemäß dem Ausführungsbeispiel der vorliegenden Erfindung welches anhand der Fig. 3 erläutert wurde, können mehrere dieser Zusammenfassungseinrichtungen hierarchisch verschaltet werden, so dass eine Pipeline-Struktur entsteht. Prinzipiell handelt es sich bei den entstehenden Pipeline-Strukturen um getaktete Systeme, d. h. beispielsweise werden in einem ersten Arbeitstakt die Bilddaten von Eingangsbildern in der ersten Verarbeitungsstufe verarbeitet, so dass die Zwischenbilder nach dem ersten Takt zur Verfügung stehen. Mit dem zweiten Takt werden dann die Zwischenbilder, die von der ersten Verarbeitungsstufe, wie beispielsweise der ersten Verarbeitungsstufe 310 in Fig. 3, verarbeitet wurden der zweiten Verarbeitungsstufe, wie beispielsweise der Verarbeitungsstufe 320, zur Verfügung gestellt. Während nun die Bilddaten der Zwischenbilder, die während des ersten Arbeitstaktes entstanden sind, in der Verarbeitungsstufe 320 verarbeitet werden, können bereits neue Bilddaten von neuen Eingangsbildern in der ersten Verarbeitungsstufe 310 weiter verarbeitet werden.

Durch die anhand der Fig. 3 erläuterte Struktur ist es möglich, eine beliebige Anzahl an Eingangsbildern verarbeiten zu können, da die Zusammenfassungseinrichtungen in beliebiger Anzahl parallel geschaltet werden können. Dabei ist es weiterhin möglich, jeder Zusammenfassungseinrichtung eigene Parameter zukommen zu lassen, so dass die unterschiedlichen Einzelbilder auch auf unterschiedliche Weise zusammengefasst werden können. Ein Ergebnisbild einer Stufe, d. h. ein Zwischenbild oder ein Bild, kann dann über weitere Stufen wiederum zusammengefasst werden, bis nach der letzten Zusammenfassungseinrichtung das resultierende Bild oder Gesamtbild des abzubildenden Objektes zur Verfügung gestellt wird. Die Anzahl der Verarbeitungsstufen ist hierbei abhängig von der Anzahl der verwendeten Sensoren, respektive von der Größe der Abbildungsflächen. Durch die Pipeline-Struktur ergibt sich, dass die Anzahl der Stufen keinen Einfluss auf die Bildwiederholrate der angeschlossenen Sensoren hat, da eine verschachtelte Verarbeitung ermöglicht wird. Aufgrund der Möglichkeit des unterschiedlichen Zusammenfassens, lassen sich die Sensoren in einer beliebigen Geometrie anordnen, d. h. die Einzelbilder können horizontal, vertikal oder auch quadratisch bzw. in beliebigen Geometrien angeordnet sein.

Ein weiterer Vorteil der vorliegenden Erfindung ist, dass mit der Pipeline-Struktur beliebig viele Einzelbilder effizient bearbeitet werden können. Dieser Vorteil wird erreicht, zum einen dadurch, dass Einzelbilddaten parallel verarbeitet werden, was durch Parallschalten beliebig vieler Zusammenfassungseinrichtungen erreicht wird. Zum anderen durch die Pipeline-Struktur, d. h. Daten die in einer Verarbeitungsstufe verarbeitet werden, werden von der Verarbeitung von Daten in der nächst höheren Verarbeitungsstufe, bzw. auch in der darunter liegenden Verarbeitungsstufe nicht beeinflusst. Dies führt dazu, dass Einzelbilddaten kontinuierlich in die Pipeline-Struktur eingegeben werden können und Gesamtbilder nach einer Anzahl der Hierarchieebenen entsprechenden Arbeitstakte zur Verfügung stehen.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Speichersignalen erfolgen, die so mit einem programmierbaren Computersystem und/oder Mikrocontroller zusammenwirken können, dass das entsprechende Verfahren ausgeführt wird.

Allgemein besteht die Erfindung somit auch in einem Computerprogrammprodukt mit auf einem maschinenlesbaren Träger gespeichertem Programmcode zur Durchführung des erfindungsgemäßen Verfahrens, wenn das Computerprogrammprodukt auf einem Rechner und/oder Mikrocontroller abläuft. In anderen Worten ausgedrückt, kann die Erfindung somit als ein Computerprogramm mit einem Programmcode zur Durchführung des Verfahrens realisiert werden, wenn das Computerprogramm auf einem Computer und/oder Mikrocontroller abläuft.

## Patentansprüche

1. Vorrichtung (200) zum Bereitstellen eines Bildes eines Teilbereiches eines Objektes basierend auf einer Mehrzahl von Eingangsbildern mit folgenden Merkmalen:
einer ersten Stufe (210) mit mindestens einer ersten Zusammenfassungseinrichtung (220) und einer zweiten Zusammenfassungseinrichtung (230), wobei jede der Zusammenfassungseinrichtungen (220, 230) folgende Merkmale umfasst:
eine erste Speichereinrichtung (222, 232) zum Speichern von Bilddaten der Eingangsbilder, wobei ein Eingangsbild eine Teilfläche des Objektes beliebiger Geometrie und Anordnung umfasst,
eine erste Verarbeitungseinrichtung (224, 234) zum Verarbeiten der Bilddaten der Eingangsbilder zu einem Zwischenbild in Abhängigkeit von einem vorgegebenen Parameter zur geometrischen Ausrichtung der Eingangsbilder, und
eine zweite Speichereinrichtung (226, 236) zum Speichern von Bilddaten des Zwischenbildes,
wobei die Eingangsbilder der ersten Zusammenfassungseinrichtung (220) und der zweiten Zusammenfassungseinrichtung (230) unterschiedlich sind;
einer zweiten Stufe (240) mit zumindest einer weiteren Zusammenfassungseinrichtung (250), wobei die weitere Zusammenfassungseinrichtung (250) folgende Merkmale umfasst:
eine dritte Speichereinrichtung (252) zum Speichern von Bilddaten der Zwischenbilder, die in
den zweiten Speichereinrichtungen (226, 236) der ersten Stufe (210) gespeichert sind,
eine zweite Verarbeitungseinrichtung (254) zum Verarbeiten der Bilddaten aus der dritten Speichereinrichtung (252) in Abhängigkeit von einem vorgegebenen Parameter zur geometrischen Ausrichtung der Zwischenbilder, um die Bilddaten der Zwischenbilder zu dem Bild zusammenzufassen, und
eine vierte Speichereinrichtung (256) zum Speichern von Bilddaten des Bildes; und
einer Steuerung zum Vorgeben eines ersten Parameters zur geometrischen Ausrichtung der Eingangsbilder für die Verarbeitungseinrichtung (224) der ersten Zusammenfassungseinrichtung (220), eines zweiten Parameters zur geometrischen Ausrichtung der Eingangsbilder für die Verarbeitungseinrichtung (234) der zweiten Zusammenfassungseinrichtung (230) und eines dritten Parameters zur geometrischen Ausrichtung der Zwischenbilder für die Verarbeitungseinrichtung (254) der weiteren Zusammenfassungseinrichtung (250) basierend auf dem Teilbereich des Objektes, wobei die Steuerung mit den Verarbeitungseinrichtungen (224; 234 ; 254) gekoppelt ist.

2. Vorrichtung (200) gemäß Anspruch 1, bei der die ersten Speichereinrichtungen (222; 232) der ersten Stufe (210) ferner mit unterschiedlichen Einzelsensoren mit beliebiger Abbildungsfläche und Abbildungsgeometrie gekoppelt sind.

3. Vorrichtung (200) gemäß einem der Ansprüche 1 oder 2, bei der die erste oder zweite Verarbeitungseinrichtung (224, 234, 254) ausgebildet ist, um die Bilddaten hinsichtlich der Intensität einzelner Bildpunkte basierend auf einem weiteren Parameter zu manipulieren.

4. Vorrichtung (200) gemäß einem der Ansprüche 1 bis 3, bei der die Speichereinrichtungen (222, 232, 252) ausgebildet sind, um Bilddaten von einer Mehrzahl von Eingangsbildern, Zwischenbildern oder Bildern zu speichern.

5. Vorrichtung (200) gemäß einem der Ansprüche 1 bis 4, mit einer Mehrzahl von Stufen, die jeweils Zusammenfassungseinrichtungen (100) aufweisen, die ausgebildet sind, um die Bilddaten eines Zwischenbildes einer Stufe als Bilddaten der Eingangbilder der nächst höheren Stufe zur Verfügung zu stellen.

6. Vorrichtung (200) gemäß einem der Ansprüche 1 bis 5, bei der die erste Stufe (210) eine Vielzahl von Zusammenfassungseinrichtungen (220) umfasst und die Steuerung ausgebildet ist, um basierend auf dem Teilbereich des Objektes die Parameter so anzupassen, dass wenigsten die Bilddaten eines Eingangsbildes verworfen werden und nicht zu einem Zwischenbild verarbeitet werden.

7. Verfahren zum Bereitstellen eines Bildes eines Teilbereiches eines Objektes, basierend auf einer Mehrzahl von Eingangsbildern mit folgenden Schritten:
Vorgeben eines ersten, zweiten und dritten Parameters basierend auf dem Teilbereich des Objektes;
Empfangen von Bilddaten erster Eingangsbilder, wobei ein Eingangsbild eine Teilfläche des Objektes beliebiger Geometrie und Anordnung umfasst;
Verarbeiten der Bilddaten der ersten Eingangsbilder zu einem ersten Zwischenbild in Abhängigkeit des ersten vorgegebenen Parameters zur geometrischen Ausrichtung der ersten Eingangsbilder;
Bereitstellen des ersten Zwischenbildes;
Empfangen von Bilddaten zweiter Eingangsbilder;
Verarbeiten der Bilddaten der zweiten Eingangsbilder zu einem zweiten Zwischenbild in Abhängigkeit des zweiten vorgegebenen Parameters zur geometrischen Ausrichtung der zweiten Eingangsbilder;
Bereitstellen des zweiten Zwischenbildes;
Verarbeiten der Bilddaten des ersten Zwischenbildes und des zweiten Zwischenbildes zu dem Bild in Abhängigkeit des dritten vorgegebenen Parameters zur geometrischen Ausrichtung der Zwischenbilder; und
Bereitstellen des Bildes.

8. Computerprogramm mit einem Programmcode zur Durchführung des Verfahrens nach Anspruch 7, wenn der Programmcode auf einem Computer ausgeführt wird.

## Claims

1. An apparatus (200) for providing an image of a subarea of an object on the basis of a plurality of input images, comprising:
a first stage (210) comprising at least a first combining means (220) and a second combining means (230), each of the combining means (220, 230) comprising:
a first storage means (222, 232) for storing image data of the input images, the input image comprising a subarea of the object which comprises any geometry and arrangement,
a first processing means (224, 234) for processing the image data of the input images into an intermediate image as a function of a predefined parameter for geometrically aligning the input images, and
a second storage means (226, 236) for storing image data of the intermediate image,
wherein the input images of the first combining means (220) and of the second combining means (230) differ from one another;
a second stage (240) comprising at least one further combining means (250), the further combining means (250) comprising:
a third storage means (252) for storing image data of those intermediate images which are stored in the second storage means (226, 236) of the first stage,
a second processing means (254) for processing the image data from the third storage means (252) as a function of a predefined parameter for geometrically aligning the intermediate images, so as to combine the image data of the intermediate images into the image, and
a fourth storage means (256) for storing image data of the image; and
a controller for defining a first parameter for geometrically aligning the input images for the processing means (224) of the first combining means (220), a second parameter for geometrically aligning the input images for the processing means (234) of the second combining means (230), and a third parameter for geometrically aligning the intermediate images for the processing means (254) of the further combining means (250) on the basis of the subarea of the object, the controller being coupled to the processing means (224; 234; 254).

2. The apparatus (200) as claimed in claim 1, wherein the first storage means (222; 232) of the first stage (210) are further coupled to different individual sensors comprising any imaging surface areas and imaging geometries.

3. The apparatus (200) as claimed in one of claims 1 or 2, wherein the first or second processing means (224, 234, 254) is implemented to manipulate the image data, on the basis of a further parameter, with regard to the levels of intensity of individual pixels.

4. The apparatus (200) as claimed in one of claims 1 to 3, wherein the storage means (222, 232, 252) are implemented to store image data of a plurality of input images, intermediate images or images.

5. The apparatus (200) as claimed in one of claims 1 to 4, comprising a plurality of stages which each comprise combining means (100) implemented to make the image data of an intermediate image of a stage available as image data of the input images of the next stage up.

6. The apparatus (200) as claimed in one of claims 1 to 5, wherein the first stage (210) comprises a multitude of combining means (220), and the controller is implemented to adapt the parameters, on the basis of the subarea of the object, such that at least the image data of an input image is discarded and is not processed into an intermediate image.

7. A method of providing an image of a subarea of an object on the basis of a plurality of input images, comprising:
defining first, second and third parameters on the basis of the subarea of the object;
receiving image data of first input images, the input image comprising a subarea of the object which comprises any geometry and arrangement;
processing the image data of the first input images into a first intermediate image as a function of the first predefined parameter for geometrically aligning the first input images;
providing the first intermediate image;
receiving image data of second input images;
processing the image data of the second input images into a second intermediate image as a function of the second predefined parameter for geometrically aligning the second input images;
providing the second intermediate image;
processing the image data of the first intermediate image and of the second intermediate image into the image as a function of the third predefined parameter for geometrically aligning the intermediate images; and
providing the image.

8. A computer program having a program code for performing the method claim 7, when the program code is executed on a computer.

## Revendications

1. Dispositif (200) de préparation d'une image d'une zone partielle d'un objet sur base d'une pluralité d'images d'entrée, aux caractéristiques suivantes:
un premier étage (210) avec au moins un premier moyen d`assemblage (220) et un deuxième moyen d'assemblage (230), chacun des moyens d'assemblage (220, 230) comprenant les caractéristiques suivantes:
un premier moyen de mémoire (222, 232) destiné à mémoriser des données d'image des images d'entrée, une image d'entrée comprenant une surface partielle de l'objet de géométrie et d'aménagement quelconques
un premier moyen de traitement (224, 234) destiné à traiter les données d'image des images d'entrées, pour obtenir une image intermédiaire en fonction d'un paramètre prédéterminé pour l'orientation géométrique des images d'entrée, et
un deuxième moyen de mémoire (226, 236) destiné à mémoriser des données d'image de l'image intermédiaire,
les images d'entrée du premier moyen d'assemblage (220) et du deuxième moyen d'assemblage (230) étant différentes;
un deuxième étage (240) avec au moins un autre moyen d'assemblage (250), l'autre moyen d'assemblage (250) comportant les caractéristiques suivantes:
un troisième moyen de mémoire (252) destiné à mémoriser des données d'image des images intermédiaires mémorisées dans les deuxièmes moyens de mémoire (226, 236) du premier étage (210),
un deuxième moyen de traitement (254) destiné à traiter les données d'image du troisième moyen de mémoire (252) en fonction d'un paramètre prédéterminé pour l'orientation géométrique des images intermédiaires, pour assembler les données d'image des images intermédiaires, pour obtenir l'image, et
un quatrième moyen de mémoire (256) destiné à mémoriser des données d'image de l'image; et
une commande pour prédéterminer un premier paramètre pour l'orientation géométrique des images d'entrée pour le moyen de traitement (224) du premier moyen d'assemblage (220), un deuxième paramètre pour l'orientation géométrique des images d'entrée pour le moyen de traitement (234) du deuxième moyen d'assemblage (230) et un troisième paramètre pour l'orientation géométrique des images intermédiaires pour le moyen de traitement (254) de l'autre moyen d'assemblage (250) sur base de la zone partielle de l'objet, la commande étant couplée aux moyens de traitement (224; 234 ; 254).

2. Dispositif (200) selon la revendication 1, dans lequel les premiers moyens de mémoire (222; 232) du premier étage (210) sont par ailleurs couplés à différents capteurs individuels à surface de reproduction et géométrie de reproduction quelconques.

3. Dispositif (200) selon l'une des revendications 1 ou 2, dans lequel le premier ou le deuxième moyen de traitement (224, 234, 254) est réalisé pour manipuler les données d'image en ce qui concerne l'intensité de points d'image individuels sur base d'un autre paramètre.

4. Dispositif (200) selon l'une des revendications 1 à 3, dans lequel les moyens de mémoire (222, 232, 252) sont réalisés pour mémoriser des données d'image d'une pluralité d'images d'entrée, d'images intermédiaires ou d'images.

5. Dispositif (200) selon l'une des revendications 1 à 4, avec une pluralité d'étages présentant, chacun, des moyens d'assemblage (100) qui sont réalisés pour mettre à disposition des données d'image d'une image intermédiaire d'un étage comme données d'image des images d'entrée de l'étage immédiatement supérieur.

6. Dispositif (200) selon l'une des revendications 1 à 5, dans lequel le premier étage (210) comporte une pluralité de moyen d'assemblage (220) et la commande est réalisée pour adapter, sur base de la zone partielle de l'objet, les paramètres de sorte qu'au moins les données d'image d'une image d'entrée soient rejetées et ne soient pas traitées pour obtenir une image intermédiaire.

7. Procédé pour préparer une image d'une zone partielle d'un objet sur base d'une pluralité d'images d'entrée, aux étapes suivantes consistant à:
prédéterminer un premier, un deuxième et un troisième paramètre sur base de la zone partielle de l'objet;
recevoir des données d'image de premières images d'entrée, une image d'entrée comportant une surface partielle de l'objet de géométrie et d'aménagement quelconques;
traiter les premières images d'entrée, pour obtenir une première image intermédiaire en fonction du premier paramètre prédéterminé pour l'orientation géométrique des premières images d'entrée;
mettre à disposition la première image intermédiaire;
recevoir des données d'image de deuxièmes images d'entrée;
traiter les données d'image des deuxièmes images d'entrée, pour obtenir une deuxième image intermédiaire en fonction du deuxième paramètre prédéterminé pour l'orientation géométrique des deuxièmes images d'entrée;
mettre à disposition la deuxième image intermédiaire;
traiter les données d'image de la première image intermédiaire et
de la deuxième image intermédiaire, pour obtenir l'image en fonction du troisième paramètre prédéterminé pour l'orientation géométrique des images intermédiaire; et
mettre à disposition l'image.

8. Programme d'ordinateur avec un code de programme pour réaliser le procédé selon la revendication 7 lorsque le code de programme est exécuté sur un ordinateur.
